# EUROPEAN PATENT APPLICATION

(11) **EP 1 724 711 A1**
(43) Date of publication of application: **22.11.2006**
(21) Application number: 05291016.3
(22) Date of filing: 11.05.2005
(51) Int. Cl.: G06K 19/077, G06K 7/00

(54) **A positioning system for keeping an electronic document on a contactless reader antenna**

(71) Applicant: Axalto SA, 92120 Montrouge (FR)
(72) Inventor: Boutet, Olivier, c/o Axalto SA, 92120 Montrouge (FR); Jean, Xavier, c/o Axalto SA, 92120 Montrouge (FR)
(74) Representative: Cassagne, Philippe M.J.

(57) **Abstract**

The invention relates to a positioning system for keeping an electronic identification document placed on a contactless reader. The problem to be solved by the invention is to provide a positioning system for keeping a contactless electronic document on a contactless reader antenna, which enables to easily place the electronic document on the reader antenna and to tightly hold it in position during an inspection of the identity of its holder by an officer, without any further intervention of the officer. The solution to this problem is achieved by embedding metallic plates (11a, 11b) in the electronic document (10), close to its antenna (36), and in placing magnets (51a, 51b) below the reader antenna table (50) and close to the reader antenna (55), in such a manner that they face the metallic plates (11a, 11b) of the electronic document during a reading session

## Description

The invention relates to a positioning system for keeping an electronic identification document placed on a contactless reader. More particularly, the invention relates to any contactless system requiring a long reading time. During this time, an electronic identification document, for example, needs to be accurately located and must be hold very tightly on the reader antenna table.

With the development of electronic identification documents, process have been implemented to include electronic devices, comprising an antenna and a radio frequency microcontroller or memory electrically connected to said antenna, inside flexible document pages, flexible document covers, or flexible layers of smart cards, in an efficient and robust way.

The applicant has developed some methods for manufacturing electronic identification documents such as passports, made of paper booklets, or contactless smart cards or RFID tags or tickets, made of paper or plastic and which contain personal data of their holder such as his/her name, birth date, address, photograph, etc.

During an identity inspection, for example, an officer puts the electronic identification document on a reader table which comprises an antenna, for a radio frequency waves communication with the electronic document trough its antenna. For positioning the document on the reader table, the officer needs some marks. Therefore, up to now, the solution consists in printing the reader antenna directly on the reader table and also to provide mechanical stops on the table. The officer must place accurately the electronic identification document on the reader table between mechanical stops and hold it tightly against the reader antenna during all the time of the reading session.

Nevertheless, with this system the officer spends a lot of time during inspection in placing the electronic identification document on the reader table. This handling is not secure and not user-friendly for the officer. Due to this drawback, the inspection officer forgets to look at the holder of the identification document.

Another drawback is that the place of the mechanical stops on the reader table can't be standardized because identification documents such as passports for example, which look like paper booklets, don't have the same size in the different states.

Considering the above, a problem intended to be solved by the invention is to provide a positioning system for keeping a contactless electronic document on a contactless reader antenna, which enables to easily place the electronic document on the reader antenna and to tightly hold it in position during an inspection of the identity of its holder by an officer, without any further intervention of the officer.

In a first aspect, the solution of the invention consists in embedding metallic plates in the electronic document, close to its antenna, and in placing magnets below the reader antenna table and close to the reader antenna, in such a manner that they face the metallic plates of the electronic document during a reading session.

Thus, thanks to this positioning system, the inspection officer is more concentrated on the inspection of the holder and doesn't waste his time in positioning and keeping the electronic identification document on the reader antenna.

Other advantageous features will appear in the following description of the invention which is made for a better understanding, by way of example and with the help of the accompanying drawings, in which :
- figures 1A and 1B are respectively a schematic front view and a cross-sectional view illustrating a contactless identification document of a positioning system according to the present invention;
- figure 2 is a schematic front view illustrating a contactless reader of a positioning system according to the present invention;
- figure 3 is a schematic front view of a positioning system according to the invention when an electronic identification document is placed on a reader antenna.

Corresponding numerals and symbols in the figures refer to corresponding parts, unless otherwise indicated.

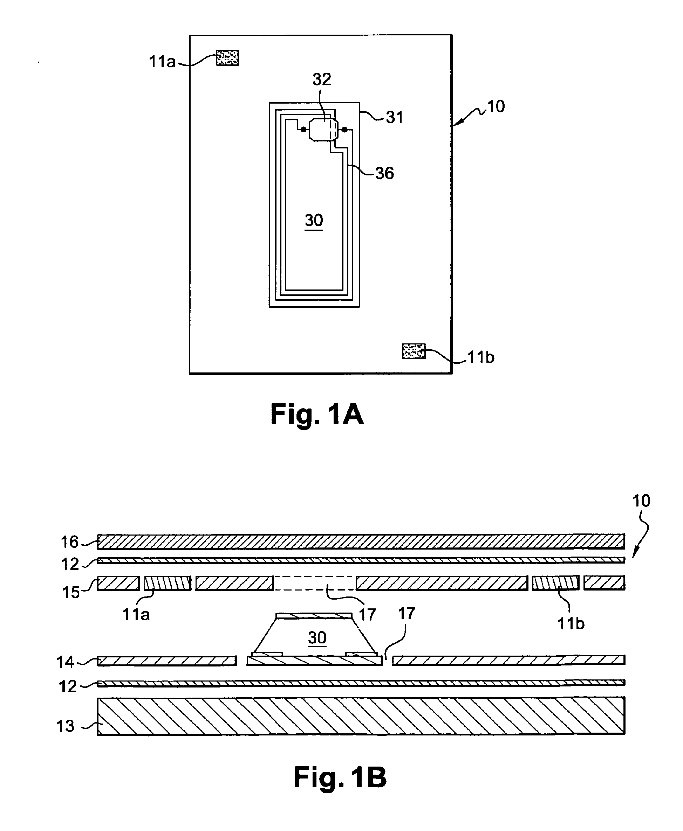

In figure 1A is illustrated an electronic identification document 10. This identification document is either a passport, such as a paper booklet, or a smart card, a RFID tag, or a ticket, made of paper or plastic. In the example of figure 1A, the identification document is in the form of a paper booklet and only one cover 10 is represented. This cover can be either the front cover, which includes for example an electronic module 30, or the back cover. The electronic module 30, also called "coil on module" comprises a substrate 31 on which is etched an antenna 36 and is positioned a radio-frequency microcontroller 32 electrically connected to the antenna 36. In such a coil on module, the antenna is part of the module itself.

In addition to the coil on module, at least two metallic plates 11a, 11b are embedded in the cover sheet of the identification document. If the identification document is a smart card, metallic plates are embedded in one of the constitution layers of the smart card.

The identification document may contain between two and four metallic plates in order to enable an efficient and accurate positioning and a tight holding on the reader antenna table.

Metallic plates are made of a ferromagnetic material, such as an iron tin alloy for example. They may have any shape, such as for example a shape of rectangle or square or arc of circle etc. They are advantageously diagonally opposed to each other, on both sides of the coil on module 30 is order to make the positioning operation easier.

When metallic plates 11a, 11b are embedded in the same cover than the coil on module 30, they give the advantage to hold the passport antenna 36 tight on the reader antenna table, so that an officer isn't obliged anymore to hold the passport cover during the reading session.

Figure 1B is a cross-sectional view of the cover 10 of the passport of figure 1A. The coil on module 30 is inserted in a multilayer arrangement, in which at least one layer 14, 15 has a cavity 17 incorporating the module 30. Layers incorporating the module are then affixed onto the cover sheet 13 and internal sheet 16 by means of standard glue layers 12, made of pressure sensitive glues or thermo sensitive glues. Metallic plates 11A and 11B are also inserted in notches made in one 15 of the layers constituting the cover 10 of the passport. Then, during the lamination step, glue layers 12 flux and embed metallic plates.

In the case of a smart card, the coil on module 30 and metallic plates 11a, 11b are embedded between at least two external flexible layers of a smart card. For that, the module and metallic plates are either incorporated in a cavity of a spacer layer positioned between the two external layers, or embedded in a standard glue layer.

Thickness of metallic plates 11A and 11B must be such that they don't create oversize. Therefore, the thickness of each metallic plate is preferably in the range of 8 to 80µm. In a preferred embodiment, the thickness is of 70µm which corresponds to the thickness of the constitution layers 14, 15 of the passport cover. In this case, metallic plates 11A and 11B are respectively inserted in cavities made in one layer 15 of the stack of layers.

Moreover, the surface of the metallic plates is limited because if it is too big, the flexibility of the cover is reduced and risks of damaging the cover are increased. Therefore, the surface of each metallic plate is preferably comprised between 1 and 2 cm².

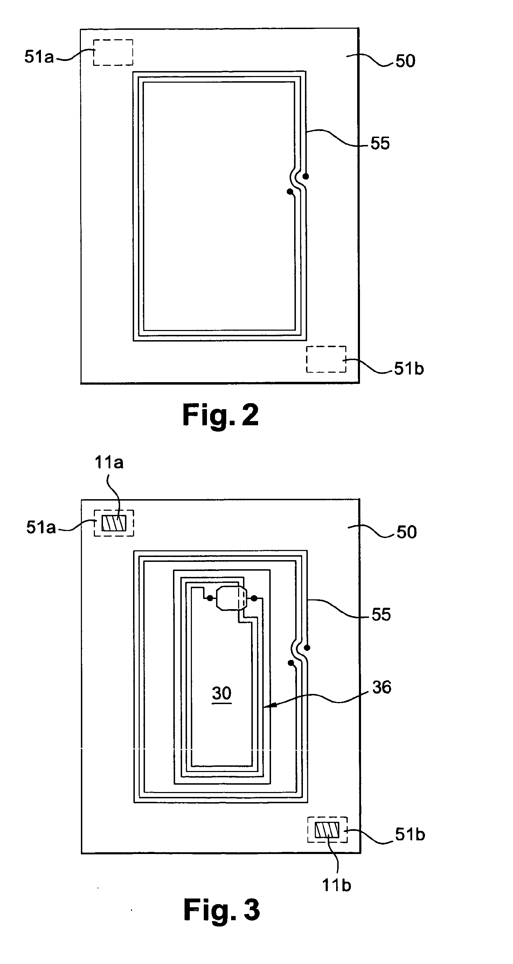

The contactless reader of figures 2 and 3 comprises a table 50 on which is provided an antenna 55. The design of this reader antenna 55 is such that it surrounds the design of the antenna 36 of the electronic document, in order to transfer data to and from the electronic document by radio-frequency waves.

The reader table 50 comprises also at least two magnets 51A, 51B placed below the reader table and close to the antenna 55. Preferably, magnets are diagonally opposed to each other on both sides of the antenna 55. Magnets are fixed either on the reader table by means of a conventional glue, such as a cyano-glue, or into a cavity milled in the reader table. Magnets 51A, 51B are either permanent or electrical magnets.

Thus, when the passport including metallic plates approaches the reader antenna, magnets attract the cover towards the antenna 55 and keep it tight on the reader antenna. Therefore, an officer can open and read the passport without taking care of the passport location.

Preferably, the attraction force of the magnets 51A, 51B is such that the magnets attract the electronic document when its metallic plates are between 0 to 1 cm apart from the magnets. For example, permanent magnets may contain at least a neodymium element.

Finally, as can be seen in figure 3, electronic identification document placement and radio-frequency coupling are both ensured thanks to magnets attraction.

It is to be noted that the magnets of the reader don't disrupt the communication between the electronic document antenna and the reader antenna, since the magnetic field of the magnets is permanent when the radio-frequency communication between the two antennas is based on a variation of the magnetic field.

The positioning system which has been described presents some advantages. Among those advantages, magnets attraction ensures both accurate location of an electronic identification document on a reader table and good magnetic coupling as it keep the electronic document tight to the reader antenna. Electronic document doesn't contain magnets, thus it can be placed close to any magnetic strip card without any problem. During a reading session, the officer doesn't need to determine how to place the passport cover on the reader table. Moreover, he can open the electronic passport without cutting the radio-frequency coupling. Metallic plates, such as irontin plates, are low-cost and can be easily inserted in a passport cover or a smart card during milling and lamination processes. Metallic plates can be inserted on both covers of a passport to let it completely opened during the reading session. Finally, permanent magnets on reader antenna table can be replaced by electrical ones. In this case, the reader device can switch on electrical magnets only when an electronic identification document starts to communicate.

The previous embodiments were described for a contactless identification document, such as a passport or an identification smart card. The invention is well adapted to all multilayer structures integrating an electronic device and which must be positioned very tightly on a reader antenna table. Especially this is the case for the electronic passport and for contactless identification smart cards. However, it will be obvious for the person skilled in the art to accommodate the technology described hereby to other contactless devices comprising one or several modules or other electric or electronic components.

## Claims

1. A positioning system for keeping a contactless electronic document on a contactless reader antenna, comprising metallic plates (11a, 11b) embedded in the electronic document (10) close to its antenna (36), and magnets (51a, 51b) placed below the reader antenna table (50) and close to the reader antenna (55), in such a manner that they face the metallic plates (11a, 11b) of the electronic document during a reading session.

2. The system of claim 1, wherein the reader antenna table (50) contains at least two magnets (51a, 51b) diagonally opposed on both sides of the reader antenna (55).

3. The system of claim 1 or 2, wherein magnets of the reader can be electrically activated.

4. The system of anyone of previous claims 1 to 3, wherein the magnets (51a, 51b) of the reader attract the electronic document when its metallic plates (11a, 11b) are between 0 or 1 cm apart from the magnets.

5. The system of anyone of previous claims 1 to 4, wherein the electronic document contains at least two metallic plates (11a, 11b).

6. The system of claim 5, wherein the metallic plates (11a, 11b) are diagonally opposed on both sides of the antenna (36) of the electronic document (10).

7. The system of anyone of previous claims 1 to 6, wherein the metallic plates (11a, 11b) are made of a ferromagnetic material.

8. The system of anyone of previous claims 1 to 7, wherein the electronic document is a paper booklet and metallic plates are embedded in at least one of the covers.

9. The system of anyone of the previous claims 1 to 7, wherein the electronic document is a smart card, and metallic plates are embedded in one of its constitution layers.

10. The system of anyone of the previous claims 1 to 9, wherein each metallic plate (11a, 11b) has a surface in the range of 1 to 2 cm².

11. The system of anyone of the previous claims 1 to 10, wherein each metallic plate (11a, 11b) has a thickness in the range of 8 to 80 µm.
